# EUROPEAN PATENT APPLICATION

(11) **EP 2 423 732 A1**
(43) Date of publication of application: **29.02.2012**
(21) Application number: 11179073.9
(22) Date of filing: 26.08.2011
(51) Int. Cl.: G02C 5/14

(54) **Eyeglasses with interchangeable temple pieces**

(30) Priority: 27.08.2010 US 869845
(71) Applicant: Shades of Color Eyewear, Inc., Palm Harbor, FL 34683 (US)
(72) Inventor: Huston, Suzanne, Palm Harbor, FL Florida 34683 (US)
(74) Representative: Johnson, Yvonne Catherine

(57) **Abstract**

The present invention relates to eyeglass frames with temples which have a quick release feature. In addition, the present invention is adaptable to use with standard eyeglass frames that accept a screw pivot pin turning the glasses from ones that require a screwdriver to replace the temples to eyeglasses that the temples can easily be replaced by hand in a matter of seconds with no tools.

## Description

### COPYRIGHT NOTICE

A portion of the disclosure of this patent contains material that is subject to copyright protection. The copyright owner has no objection to the reproduction by anyone of the patent document or the patent disclosure as it appears in the Patent and Trademark Office patent files or records, but otherwise reserves all copyright rights whatsoever.

### BACKGROUND OF THE INVENTION

### Field of the Invention

The present invention relates eyeglass ware. In particular, the present invention relates to glasses with a replaceable temple that comprises a quick interconnect system.

### Description of Related Art

Eyewear consists of a frame which holds a pair of lenses and two temples which extend out and over the ear of the wearer for holding the eyeglasses in place. Usually a nose bridge of some kind in combination with the temples creates a three point structure for balancing the glasses on the wearer's face. Frequently the temples are hinged allowing them to be folded in behind the frame for storage. The frames usually comprise a pivot pin receptor. In most cases this is some form of a threaded bore for receiving an eyeglass screw which acts as the pivot pin for folding the temples against the frame and to attach the temples on the frame. The temples are normally removable from the frame, but not easily or quickly, by requiring the removal of a tiny, easily losable, threaded eyeglass screw which requires a specialty screwdriver to remove and install, good eyesight, and some patience.

The idea of making the temple pieces easy to remove without the necessity of dealing with a threaded interface, i.e. quick release, has been frequently thought of as useful for eyeglass temples. Different types of temples for day wear, sports, or the like are useful to have. Without the glasses having some frame interface for interchangeability of the temples, the user of the glasses must have several pairs of glasses since removing the screwed on temple is difficult and time consuming. In addition, the temple screws tend to wear down the screw threads quickly and the screw threads are easy to strip making it not practical to remove the temples very often even if one did want to go to the trouble of continually installing and removing the temple screw.

There have been several attempts over the past 3 decades at quick release eyeglass temples that avoid having to remove a temple screw to remove the temples. Systems include, for example, US Patent Nos. 4,153,347; 5,418,581; 5,963,296; 6,050,686; 6,969,173 and 7,175,276; and also PCT published applications WO 2001/071413 and WO 2008/106683. These patents and applications all revolve around making the temples quicker to remove by replacing the standard screw which acts as the temple pivot point when folding the glasses with some means of detaching the temple from the pivot point that doesn't involve a screw. However, by continually removing the temple from around its pivot point, the temple attachment means is doing double duty in both pivoting the temple and holding it in place with the eyeglass frame. This attachment/pivot point becomes a weakness of the eyeglasses and all these methods suffer from a short life before the attachment means wears out or breaks. Even further, it is necessary to not only have new temples, it is also necessary to have a completely new frame as in most cases the standard screw pivot point frame cannot be modified to accept the quick release and the temples must be modified to make the temples quick release.

### BRIEF SUMMARY OF THE INVENTION

The present invention relates to eyeglass frames with temples which have a quick release feature. In addition, the present invention is adaptable to use with standard eyeglass frames that accept a screw pivot pin, therefore turning the eyeglasses from ones that require a screwdriver to replace the temples to eyeglasses whereby the temples can easily be replaced by hand in a matter of seconds with no tools.

In particular, the present invention relates to a pair of eyeglass frames with quick release and interchangeable temples that are removable while having a fixed axel from a screw or a permanently installed pivot axel. Because nothing is attached or removed from the pivot axel, the weakness and difficulty of using the prior methods of temple removal are overcome. In at least some embodiments the system can be attached to a standard eyeglass frame to make any pair of glasses have quick release removable temples.

In one embodiment the present invention relates to an eyeglass system for the quick release of the eyeglass temples from the eyeglass frame comprising;
a) an eyeglass frame having a pair of temple pivot pin receptors;
b) a pair of spring clips having a fixed portion and a spring portion biased to the open position capable of attaching to each of the frame temple pivot pin receptors via a pivot pin in a manner which allows the spring clip to pivot from an open position to a closed position; and
c) a pair of eyeglass temples having an ear end and a frame end, the frame end having an opening for inserting the clips in a manner that the bias of the spring clip holds the temple on the spring clip.

In the system of this embodiment the spring clip may lock the temple in place during use. The spring portion may comprise a nub which locks against an opening in a side of the temple.

In the system of this embodiment the spring portion may be biased in the plane of pivoting spring clip as it moves from open to closed position.

In the system of this embodiment there may be a plurality of matching pairs of eyeglass temples according to c).

In the system of this embodiment the pivot pin may be an eyeglass screw.

In the system of this embodiment the temples may have removable decorations.

There is also provided a pair of eyeglass temples according to c) of this embodiment, for use with the eyeglass system of this embodiment.

In another embodiment the present invention relates to a system for converting an eyeglass frame having temple screw pivot pin receptors to use with a quick release temple comprising:
a) a pair of spring clips having a fixed portion and a spring portion biased to the open position capable of attaching to each of the frame temple pivot pin receptors via a temple screw pivot pin in a manner which allows the spring clip to pivot from an open position to a closed position on an eyeglass frame; and
b) a pair of eyeglass temples having an ear end and a frame end, the frame end having an opening for inserting the clips in a manner that the bias of the spring clip holds the temple on the spring clip.

In the system of this embodiment the spring clip may lock the temple in place during use. The spring portion may comprise a nub which locks against an opening in a side of the temple.

In the system of this embodiment the spring portion may be biased in the plane of pivoting spring clip as it moves from open to closed position.

In the system of this embodiment there may be a plurality of matching pairs of eyeglass temples according to b).

In the system of this embodiment the temples may have removable decorations.

There is also provided a pair of eyeglass temples according to b) of this embodiment, for use with the eyeglass system of this embodiment.

During use of the present invention, the spring clip remains on the frame and the temple pieces of the present invention are installed or removed onto the spring clip, thus negating the need to remove the temple spring or constantly removing or installing something against the pivot pin of the eyeglass assembly.

### BRIEF DESCRIPTION OF THE DRAWINGS

Fig. 1A is a side view of the spring clip of the invention.

Fig. 1 B is a front view of the spring clip to show the pass through hole for the spring.

Fig. 2 is perspective view of a temple of the present invention.

Fig. 3 is a perspective view of a spring clip mounted on an eyeglass frame.

Fig. 4 is a close up perspective of a temple mounted on the spring clip on an eyeglass frame.

Fig. 5 is a perspective view of eyeglasses with the removable temples of the invention.

### DETAILED DESCRIPTION OF THE INVENTION

While this invention is susceptible to embodiment in many different forms, there is shown in the drawings and will herein be described in detail specific embodiments, with the understanding that the present disclosure of such embodiments is to be considered as an example of the principles and not intended to limit the invention to the specific embodiments shown and described. In the description below, like reference numerals are used to describe the same, similar or corresponding parts in the several views of the drawings. This detailed description defines the meaning of the terms used herein and specifically describes embodiments in order for those skilled in the art to practice the invention.

The terms "a" or "an", as used herein, are defined as one or as more than one. The term "plurality", as used herein, is defined as two or as more than two. The term "another", as used herein, is defined as at least a second or more. The terms "including" and/or "having", as used herein, are defined as comprising (i.e., open language). The term "coupled", as used herein, is defined as connected, although not necessarily directly, and not necessarily mechanically.

Reference throughout this document to "one embodiment", "certain embodiments", and "an embodiment" or similar terms means that a particular feature, structure, or characteristic described in connection with the embodiment is included in at least one embodiment of the present invention. Thus, the appearances of such phrases or in various places throughout this specification are not necessarily all referring to the same embodiment. Furthermore, the particular features, structures, or characteristics may be combined in any suitable manner in one or more embodiments without limitation. The features set out in the description may be used in relation to the invention as described in the claims without limitation.

The term "or" as used herein is to be interpreted as an inclusive or meaning any one or any combination. Therefore, "A, B or C" means any of the following: "A; B; C; A and B; A and C; B and C; A, B and C". An exception to this definition will occur only when a combination of elements, functions, steps or acts are in some way inherently mutually exclusive.

The drawings featured in the figures are for the purpose of illustrating certain convenient embodiments of the present invention, and are not to be considered as limitation thereto. Term "means" preceding a present participle of an operation indicates a desired function for which there is one or more embodiments, i.e., one or more methods, devices, or apparatuses for achieving the desired function and that one skilled in the art could select from these or their equivalent in view of the disclosure herein and use of the term "means" is not intended to be limiting.

As used herein the term "eyeglasses" refers to eyeglass frames for holding lenses, e.g. vision lenses, and which have a pair of pivot pin receptors. The frames may be provided with a pair of temple pieces which can pivot against the frame when attached to the frame by a pivot pin in the pivot pin receptors, which creates a hinge construction between the frame and temples. The "eyeglass frames" of the present invention can be provided with a pair of lenses. The lenses may be prescription and non-prescription lenses. The lenses may be vision lenses for correcting vision or may be protective lenses, e.g. sunglass lenses for protecting the eyes from the sun. The "eyeglass frames" of the present invention have a pair of pivot pin receptors. As is conventional, one pivot pin receptor is located towards the left hand side of the frame and one pivot pin receptor is located towards the right hand side of the frame. In one embodiment, the "pivot pin receptor" is a screw receptor for a temple screw of the type used with standard prescription and non-prescription eyeglasses. In other embodiments other screw attachments, or other attachment means requiring a tool or other fixed non-quick release attachment means, are considered. The screw and screw receptors create a hinge for pivoting anything attached to the pivot pin receptor. Use of a standard eyeglass temple screw as the pivot pin allows more flexibility with the present invention; however, the pivot pin receptor refers to any method, device, or means whereby a pivoting member, such as a temple of the present invention, can attach to an eyeglass frame.

The eyeglass frame will have a pair of lens holders, within which a pair of lenses (a left hand lens and a right hand lens) can be held. The frame may suitably have a nose bridge, which in combination with the temples can create a three point structure for balancing the eyeglasses on the wearer's face. The nose bridge is located between the pair of lens holders.

In use the temples extend out and over the ear of the wearer for holding the eyeglasses in place. The temples may be folded in behind the frame for storage. As is conventional, the pair of temples is made up of a left hand temple (to be located on the left side of the frame) and a right hand temple (to be located on the right side of the frame).

As used herein the phrase "quick release" refers to a means for attaching and detaching that is possible without tools and that can preferably be accomplished in a very brief amount of time (e.g. a couple of seconds or less). Standard temples require a screwdriver tool and it takes time to remove the screw. When replacing the new temple, aligning the new screw, and getting it "started" are even more difficult, and it is easy to misalign the screw, drop it, or the like. This process can take from a minute to several minutes when there are problems. However, even without a screw attachment, unless something can be removed quickly and easily, such as within 10 seconds or less, e.g. 5 seconds or less, it is not within the meaning of "quick".

As used herein "spring clip" refers to a compression spring biased to the open position. That is, the spring clip is biased such that the spring is in the holding position (where it can hold a temple on the spring clip) by springing open and needs to be pressed inward or compressed to "open" the clip (i.e. so that it is no longer in the holding position and release of the temple from its position on the spring clip is possible). In one embodiment the bias is in the same plane as the temple's pivot to open and close against the eyeglass frame. By having a fixed portion, the spring portion can flex in relationship to the fixed portion to create the spring clip action. In addition, the spring clip preferably has a pivot pin receptor which mates with the frame pivot pin receptor via a pivot pin (such as a temple screw) in a manner which allows the spring to pivot from an open position to a closed position against the frame. By "open position" is meant that the spring clip is in a position where, when a temple piece is attached (as described elsewhere), it holds the temple piece in the position for the eyeglass user to position the temple piece over the user's ear.

In one embodiment, the spring clips will have a lock for locking a temple piece onto the spring clip. In one embodiment, this lock is a nub (a small protrusion in both diameter and height) which fits into a hole, indentation or the like in the temple when the spring is in a non-compressed, or close to non-compressed, position. The nub fitting into the hole holds the temple in place. The temple can be removed by compressing the spring such that the nub is no longer in the hole. The nub itself can be compressed or a release nub separate from the locking nub can be utilized. The nubs are in one embodiment no taller than about 1, 2, 3, or 4 mm, e.g. from 0.1 to 4mm or from 1 to 4mm. In other embodiments it is larger than 4 mm, however. The diameter of the nubs can be 1, 2, 3, 4 mm or more, e.g. from 0.1 to 6mm or from 1 to 4mm. One embodiment of the locking nub is where the nub has a flat surface for holding against a wall of the hole in the temple which resists the temple pulling off the spring clip without compressing the spring.

In one embodiment, the length of the spring is from about 10 mm to about 50 mm in length e.g. about 20mm to about 45mm or about 30mm to about 40mm; in one embodiment, the length is about 35 mm in length. The shape of the spring clip can be anything that can be fit inside the temple piece as described elsewhere. However, rectangular, triangular, or the like, as necessary, can all be implemented as the shape of the spring clip.

The spring clips attach to the eyeglass frame and preferably remain on the frame unless being replaced because of breakage or the like. The spring clips are preferably attached to the frame via the pivot pin receptors in both the spring clip and frame, for example, by screwing a temple screw into both the frame and spring clip, in the same or similar manner as a standard temple is screwed onto the eyeglass frame. During use of the present invention, the spring clip remains on the frame and the temple pieces of the present invention are installed or removed onto the spring clip, thus negating the need to remove the temple spring or constantly removing or installing something against the pivot pin of the eyeglass assembly.

The "temples" of the present invention are utilized as regular eyeglass temples in that, once attached to the frame, these are used to hold the eyeglasses on the ears of the user. These temples are modified to attach to the spring clip, however. Temples have an ear end (the distal end) and a frame end (the end proximal the eyeglass frame when attached). The temples have an opening in the frame end. The opening is shaped for inserting a distal end of the spring clip into the opening in a manner such that the opening bias of the spring clip holds the temple on the spring clip (and thus on the frame). In one embodiment the temples have a feature where the spring clip not only holds the temple in place, but the spring clip also locks the temple in place. As noted above (and shown in an embodiment in the figures), by placing a hole or indentation (for example, on the inside of the temple toward the user), a nub on the spring clip can lock against the temple, holding it in place. In addition, an opening for a release button can also aid in the quick removal of a temple and sallow it to be replaced with a different temple piece.

In use, the temple opening is pushed onto the distal end of the spring clip to a position where the temple is in place, for use in supporting the eyeglasses on the user's ear. Where a locking mechanism is used, the correct position is found when the lock engages because of the spring mechanism. Once locked or positioned on the spring clip, the temple will act like a standard temple piece. In removing the temple, the quick release function allows the temple to be removed in a second or two, by either just pulling the temple off or depressing/compressing the spring and pulling the temple off. A new temple can just be pushed onto the spring. In one embodiment, there are a plurality of (i.e. two or more) pairs of temples provided in the system of the invention and these can be exchanged on the frame using the spring clips of the present invention. In another embodiment a pair of temples can be utilized, purchased, or sold for use as replacement temples for the above system.

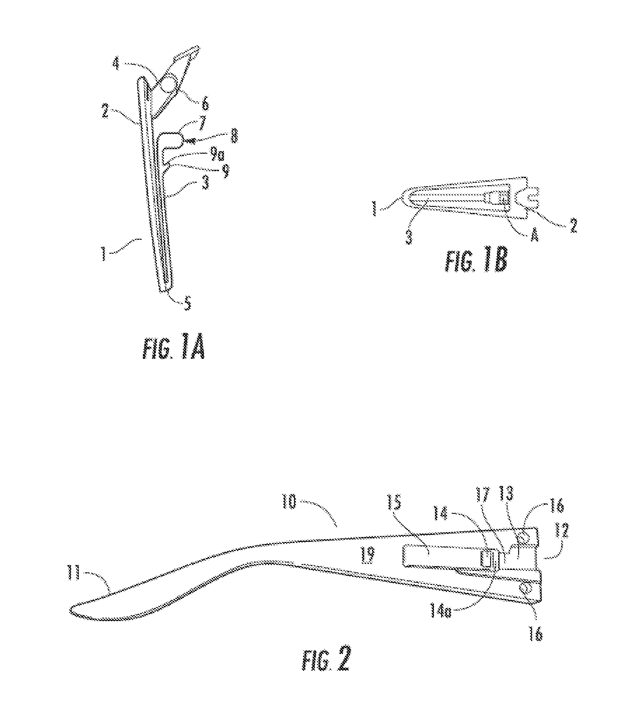

Now referring to the drawings and the particular embodiments depicted therein, Fig. 1A is a side view of a spring clip of the present invention. Spring clip 1 comprises elongated fixed portion 2 and spring 3. The spring 3 is shown attached to the fixed portion 2 at distal end 5. The spring 3 is shown in the relaxed expanded position, biased to the open position. Since spring 3 is made of metal or other flexible material, when pressed along the spring, such as on release button 7, such pressing will cause the spring 3 to flex between a relaxed open (shown) and a compressed closed position. The release button 7 is positioned at the end of spring 3 for the purpose of leveraging the spring with the least amount of effort. The length of the spring would be determined based on the metal, plastic, or other materials the spring 3 is made from as well as the length of the spring 3 and how much tension is to be created. One skilled in the art can balance the factors necessary to make a spring for the present invention in view of the present disclosure. Note that the distance between the fixed portion 2 and the spring 3 aids in giving room to compress the spring when desired. In general, compressing the spring is accomplished by pushing on the release button 7 in the direction of arrow 8. The pivot pin receptor 4 is depicted in this embodiment as an arm with threaded hole 6 for accepting a normal temple screw (shown in other views). Lastly, in this embodiment locking nub 9 is shown with flat side 9a for engaging a hole in the temple and locking it in place on the spring clip.

In Fig. 1 B a frontal view of spring 1 is shown. In this view, one can see the cutout hole A where the spring 3 can flex through without hitting the fixed portion 2 of spring clip 1.

Fig. 2 shows a perspective view of a quick release temple of the present invention. The eyeglass temple 10 has a distal end, which is the ear end 11, and a proximal end, which is the frame end 12. Frame end 12 is the end of the temple 10 that attaches/is closest to the eyeglass frame. In the present invention in this embodiment the spring clip 1 of Fig. 1A engages this temple 10. The temple 10 comprises slot 17. The slot 17 is where the distal end 5 of the spring clip 1 is inserted to engage the two and lock the temple 10 on the spring clip and thus on a frame. It is pushed all the way into the temple 10 and is accommodated by compartment 15 which is long enough for the entire length of the spring to be inserted as desired. Shown in this embodiment is lock hole 14. The lock hole 14 is positioned in the temple 10 such that when spring clip 1 is inserted in hole 13 and pushed to the correct desired position, the locking nub 9 is first compressed by lip 14a as it passes underneath it and then biases to the open position when the nub 9 reaches the lock hole 14. In addition, because of the position of the proximal edge of hole 14, the matching flat edge 9a (seen in Fig. 1A) of the locking nub 9 fits against the proximal edge and resists removal of the temple without compressing the spring 3. Slot 17 is provided to accommodate the release button 7 on the spring clip 1 which, as shown in following figures, fits into this area, sticks out, and is easy to press to release the locking nub 9 from the locking hole 14 by compressing it sufficiently to once again clear lip 14a and remove the temple 10. Shown in this embodiment are screw holes 16 designed for attaching a decorative feature on the opposite side of the inner side 19 shown.

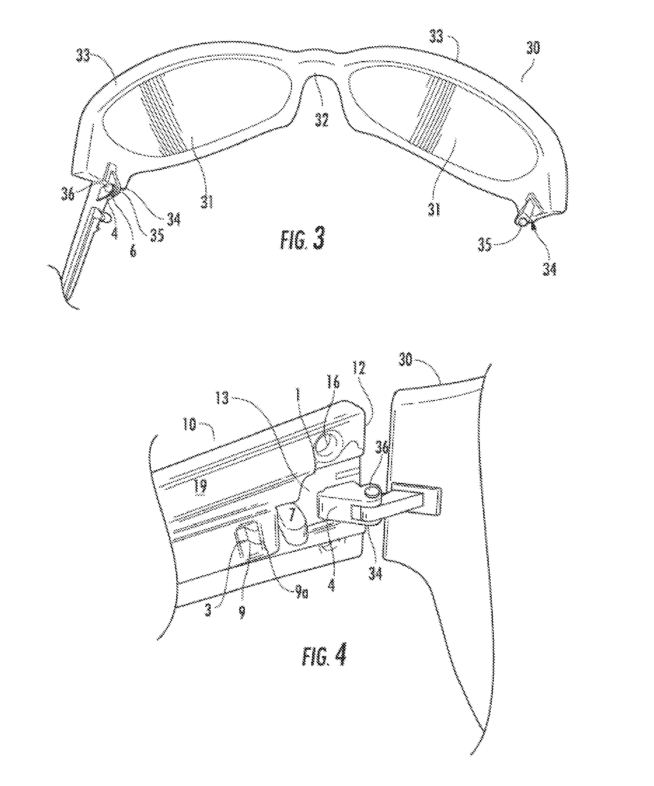

Fig. 3 is a perspective view of a spring clip 1 attached to an eyeglass frame. Eyeglass frame 30 consists of nose bridge 32, lens holders 33, and pivot pin receptors 34 designed to accept a temple screw. Lenses 31 are provided in the lens holders 33. The pivot pin receptor 34 has hole 35 which is threaded for accepting a screw for attachment purposes. Shown in this figure is spring clip 1 attached to frame 30. The pivot pin acceptor 34 is aligned with the pivot pin receptor 4 of the spring clip 1, such that their respective threaded holes 35 and 6 are aligned to accept a screw 36. Screw 36 is threaded down the aligned holes 35 and 6, firmly attaching the spring clip 1 to the frame 30 in a manner such that it is hinged around the pivot screw 36, in the same manner that temples are attached to frames with regular glasses.

Fig. 4 is a close up view showing a temple 10 of Fig. 2 attached to spring clip 1 of Fig. 1A which is attached to frame 30 of Fig. 3. In this view, the distal end 5 of spring clip 1 has been pushed into hole 13 such that the temple 10 is locked in place on spring clip 1 via the locking nub 9 on the spring 3 engaging with hole 13, wherein the flat edge 9a of the spring 3 is engaged with an edge of the hole 13. The removal of temple 10 is accomplished by pressing on release button 7, which compresses spring 3, and pulling the temple 10 off the spring clip 1.

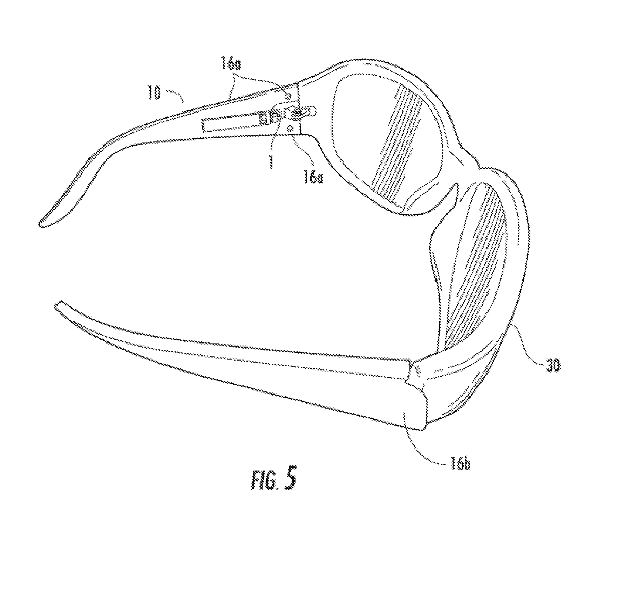

Fig. 5 depicts a pair of eyeglasses with a pair of removable temples 10 mounted on eyeglass frames 30. In this view decoration 16b is attached to temples 10 via two attachment screws 16a. One can easily remove the shown temples in a second or two and replace them with temple having a different color, style, or the like, all in a matter of seconds.

Those skilled in the art to which the present invention pertains may make modifications resulting in other embodiments employing principles of the present invention without departing from its spirit or characteristics, particularly upon considering the foregoing teachings. Accordingly, the described embodiments are to be considered in all respects only as illustrative, and not restrictive, and the scope of the present invention is, therefore, indicated by the appended claims rather than by the foregoing description or drawings. Consequently, while the present invention has been described with reference to particular embodiments, modifications of structure, sequence, materials and the like apparent to those skilled in the art, still fall within the scope of the invention as claimed by the applicant.

## Claims

1. A eyeglass system for the quick release of eyeglass temples from an eyeglass frame, the system comprising:
a) an eyeglass frame having a pair of temple pivot pin receptors;
b) a pair of spring clips, each having a fixed portion and a spring portion biased to an open position, each being capable of attaching to one of the temple pivot pin receptors via a pivot pin in a manner which allows the spring clip to pivot from an open position to a closed position; and
c) a pair of eyeglass temples, each having an ear end and a frame end, each frame end having an opening for inserting one of the spring clips in a manner such that the bias of the spring portion holds the temple on the spring clip.

2. An eyeglass system according to claim 1 which comprises a pair of pivot pins for attaching the pair of spring clips to the pair of temple pivot pin receptors.

3. An eyeglass system according to claim 2 wherein each pivot pin is an eyeglass screw.

4. A system for converting an eyeglass frame to be useable with a quick release temple, wherein the eyeglass frame has a pair of temple pivot pin receptors, such as temple screw pivot pin receptors, the system comprising:
a) a pair of spring clips, each having a fixed portion and a spring portion biased to an open position, each being capable of attaching to one of the temple pivot pin receptors via a pivot pin in a manner which allows the spring clip to pivot from an open position to a closed position; and
b) a pair of eyeglass temples, each having an ear end and a frame end, each frame end having an opening for inserting one of the spring clips in a manner such that the bias of the spring portion holds the temple on the spring clip.

5. An eyeglass system according to any one of claims 1 to 4 wherein each spring clip is capable of attaching to one of the temple pivot pin receptors via a pivot pin in a manner which allows the spring clip to pivot from an open position where, when a temple piece is attached thereto, it holds the temple piece in a position for the eyeglass user to position the temple piece over the user's ear, to a closed position where, when a temple piece is attached thereto, it holds the temple piece in a position against the frame.

6. An eyeglass system according to any one of claims 1 to 5 wherein the pair of spring clips can lock the pair of temples in place on the spring clips during use of the eyeglass frame.

7. An eyeglass system according to claim 6 wherein the spring portion of the spring clip comprises a nub which locks against a hole in a side of the temple.

8. An eyeglass system according to any one of the preceding claims wherein the spring portion is biased in the plane of the pivoting spring clip as it moves from the open position to the closed position.

9. An eyeglass system according to any one of the preceding claims which comprises two or more sets of the matching pairs of eyeglass temples.

10. An eyeglass system according to any one of the preceding claims wherein the temples have removable decorations.

11. An eyeglass system according to any one of the preceding claims wherein each spring clip has a pivot pin receptor which mates with one of the frame's pivot pin receptors via a pivot pin.

12. An eyeglass system according to claim 11 wherein each of the frame's pivot pin receptors has a hole which is threaded and wherein each of the spring clip pivot pin acceptors has a hole which is threaded, whereby each frame pivot pin receptor can be aligned with one of the spring clip pivot pin receptors, such that their respective threaded holes are aligned to accept a screw as the pivot pin.

13. A pair of eyeglass temples for use with the eyeglass system of any one of the preceding claims, the pair of eyeglass temples having an ear end and a frame end, each frame end having an opening for inserting one of the spring clips of the system in a manner such that the bias of the spring clip holds the temple on the spring clip.

14. The eyeglass system of any one of claims 1 to 12 or the eyeglass temples according to claim 13, wherein there is a hole or indentation in a side of each temple and wherein this hole or indentation can engage with a nub provided on the spring portion of the spring clip, allowing the temple to be locked in place during use of the eyeglass frame.

15. The eyeglass system or eyeglass temples according to claim 14, wherein each temple is provided with a lip inside the opening, with the hole or indentation being positioned relative to the lip such that when the spring clip is inserted in the opening the nub located on the spring portion of the spring clip is first compressed by the lip as it passes underneath it and then biases to the open position when the nub reaches the hole or indentation.
